(19) **Europäisches Patentamt / European Patent Office / Office européen des brevets**

(11) **EP 4 273 323 B1**

(12) **EUROPEAN PATENT SPECIFICATION**

(45) Date of publication and mention
of the grant of the patent:
**30.04.2025 Bulletin 2025/18**

(21) Application number: **23170912.2**

(22) Date of filing: **01.05.2023**

(51) International Patent Classification (IPC):
*E01F 9/576* (2016.01)          *G03B 21/00* (2006.01)
*G09F 19/18* (2006.01)          *G09F 19/22* (2006.01)

(52) Cooperative Patent Classification (CPC):
**E01F 9/576; G03B 21/00; G03B 21/2033;
G03B 21/28**

(54) **SYSTEM AND METHOD FOR PROJECTING A LINE OF LIGHT ON A SURFACE**

SYSTEM UND VERFAHREN ZUR PROJEKTION EINER LICHTLINIE AUF EINE OBERFLÄCHE

SYSTÈME ET PROCÉDÉ DE PROJECTION D'UNE LIGNE DE LUMIÈRE SUR UNE SURFACE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **02.05.2022 NL 2031763**

(43) Date of publication of application:
**08.11.2023 Bulletin 2023/45**

(73) Proprietor: **EPEON Holding B.V.
5706 LW Helmond (NL)**

(72) Inventors:
• **Van der Voort, Ronald Hans
5706 LW Helmond (NL)**
• **Nakotte, Lars
47551 Bedburg-Hau (DE)**
• **Funck, Max Christian
14482 Potsdam (DE)**

(74) Representative: **Arnold & Siedsma
Bezuidenhoutseweg 57
2594 AC The Hague (NL)**

(56) References cited:
**WO-A2-2008/005545      DE-A1- 3 915 254
JP-A- 2000 064 233      JP-A- 2012 154 083**

## Description

## FIELD OF INVENTION

The field of the invention relates to a system and a method for projecting a line of light on a surface.

## BACKGROUND

Lighting is typically applied to improve the visibility of a road surface, and in particular road markings on said road surface. This is usually achieved through LED luminaires raised on the edge of the road surface or trough LED lights embedded on the road surface, such as cat's eyes or road studs. However, the visibility of the road surface, and in particular road markings on said road surface, may remain poor for some situations such as bad weather conditions and/or wear of the road surface and/or wear of the road markings themselves. Moreover, those LED lighting systems are usually glowing an excessive amount of light in all directions leading to light pollution and inefficient energy use. Further, building LED road studs or removing them from the asphalt is labor intensive. For example, if the top layer of the asphalt is replaced, the studs need to be removed first because they cannot be recycled. In addition, LED road studs are vulnerable and get damaged easily by heavy traffic.

Therefore, it would be desirable to project light markings directly onto the road surface. JP 2012 154083 A relates to a pole mounted apparatus for projecting a light line on the surface of a snow covered road, including a plurality of radially arranged light sources which emit a light beam passing through an arc shaped Fresnel lens.

However, despite the activity in the field, there remains an unaddressed need for an improved configuration of the properties of the projected light markings, such as the length, uniformity, and shape of the projected light markings.

## SUMMARY

An object of embodiments of the invention is to provide a system and a method for projecting a line of light on a surface, such as a traffic surface, which allows for a more reliable and precise configuration of the properties of the line of light, in particular in term of length, uniformity, and shape. Such improved system and method may be used to project light markings onto a traffic surface either to replace the surface markings or on top of the existing surface markings to enhance visibility thereof.

According to a first aspect of the invention, there is provided a lighting system for projecting a line of light on a surface. The system comprises a light generating unit, a reflective element and a first adjusting unit. The light generating unit comprises one or more light sources and an optical element. The optical element is configured to receive light from the one or more light sources and to emit a first, line-shaped light beam with a first opening angle. The reflective element is configured to receive the first light beam and to reflect the received first light beam towards the surface as a second light beam with a second opening angle, which is larger than the first opening angle, in order to project a line of light on the surface. The first adjusting unit is configured to adjust a distance between the optical element and the reflective element. It is noted that in many cases, adjusting the distance between the optical element and the reflective element can be achieved by adjusting the distance between the light generating unit as a whole and the reflective unit, i.e., that in adjusting the distance between the optical element and the reflective element the distance between the one or more light sources and the optical element is maintained. However, other options could be considered, in particular wherein the distance between the one or more light sources and the optical element need not be maintained.

An inventive insight underlying the first aspect is that, by reflecting the received first light beam towards the surface as a second light beam with a second opening angle larger than the first opening angle, the rate at which the length of the projected line of light changes with respect to the position of the light beam within the projection path is increased. The projection path is defined here as the path followed by light rays at the center of the line of light to reach the surface on which the line of light is projected. Therefore, a line of light with a greater length is obtained without increasing the length of the projection path, i.e., without requiring the lighting system to be positioned at a great height above the surface, or otherwise at an inconveniently large distance from the surface. Moreover, by adjusting a distance between the optical element and the reflective element, the length of the line of light can be adjusted since the length of the projection path is modified, which may increase the flexibility of the system, making it possible to adapt the length of the line projected on the surface *in situ.*

The length of the line-shaped light beam at a specific position within the projection path is defined as the distance between the two edges of the line-shaped light beam within a plane transverse to the axis of propagation and passing through said position. The edges of the line-shaped light beam are defined here as the transverse position at which the light beam ends altogether, or at which the intensity of the line-shaped light beam drops sharply.

The first opening angle is defined here as the angle formed by the two edges of the line-shaped light beam and a virtual point from which the line-shaped light beam is perceived to coming from. In other words, said virtual point is found by tracing real rays from the line-shaped light beam backward to perceived or apparent origins of ray divergences.

The first opening angle may depend on the refractive index of the optical element. Since the length of the line-shaped light beam changes with respect to the position within the projection path at a rate that depends on the first opening angle, the refractive index of the optical element can be chosen to match a desired first opening angle that will lead to a desired length. For example, a larger first opening angle may be obtained by choosing a higher refractive index of the optical element, and thus leading to a line of light with a greater length without increasing the length of the projection path. However, the first opening angle may be limited to about 120 degrees due to limits of the refractive index of known materials. Therefore, a lighting system including only the light generating unit is limited in the length of a line it can project on a surface from a given distance.

The addition of a reflective element can overcome this limitation by reflecting the received first light beam towards the surface as a second light beam with a second opening angle, which is larger than the first opening angle. Therefore, the reflective element further enlarges the projected line length beyond the capabilities of the line generating optics alone, since the second light beam spreads more widely the first light over a similar distance. In that manner, the length of the line of light projected on the surface is increased without increasing the length of the projection path.

The proposed lighting system is particularly useful for projecting a line of light on a traffic surface, from a height similar to that of existing luminaire poles. The term "traffic surface" may refer to any space intended to sustain vehicular and/or pedestrian traffic, such as a road surface ((sub)urban streets or boulevards, roads, highways, countryside roads or paths, etc.), a biking or skating surface (bikeways, skateparks, ways dedicated to light electric vehicles (LEVs), micro-EVs, etc.), a pedestrian surface (public places, markets, parks, pathways, sidewalks, zebra crossings, etc.), a railway surface (railways tracks for trams, trains, etc.), a water surface (waterways for boats, jet skis, etc.), or a way surface dedicated to aircrafts, such as a taxiway or a runway. The traffic surface may comprise one or more surface markings (e.g. an arrow road marking, a bike-only lane, a one-way lane, etc.) instructing vehicles and/or pedestrian to behave appropriately on the traffic surface (e.g. drive forward, turn left, do not cross the line, etc.). However, the surface is not limited to a traffic surface and may correspond to any (preferably substantially planar) surface, such as a façade of a building.

According to a preferred embodiment, the first adjusting unit may be configured such that, by adjusting the distance between the optical element and the reflective element, a length of the line of light projected on the surface is changed.

For example, the length of the projection path may be modified by the first adjusting unit, by adjusting the relative distance between the optical element and the reflective element, which may be achieved by changing the position of the light generating unit, of the reflective element, or of both. For instance, if both the light generating unit and the reflective element are attached to a pole, as described in more detail in relation to the figures, the first adjusting unit may adjust the height of the reflective element along this pole. Preferably, the length of the projection path is significantly greater than the distance change between the optical element and the reflective element such that small adjustments of said distance can result to a more significant change in the length of the line of light on the surface on which the line of light is projected. Moreover, in some embodiments wherein the line of light is reflected by the reflective element in a direction substantially opposite to the direction of incidence of the first light beam, the previous effect is enhanced due to the almost roundtrip of the light beam between the light generating unit and the reflective element.

According to a further embodiment, increasing the distance between the optical element and the reflective element increases the length of the line of light projected on the surface.

According to an exemplary embodiment, the reflective element may correspond to any one of the following: a V-shaped mirror, a substantially V-shaped mirror with concave ends, a cone-shaped mirror, or a cylindrical-shaped mirror. Generally, it was found that reflective elements with an aspherical reflective surface, in particular an aspherical reflective surface configured in accordance with an intensity distribution of the line light received from the optical element, leads to advantageous results. "Substantially V-shaped" here means that the mirror has two substantially symmetrical "sides", which converge at one end, on the symmetry axis; the point at which the two sides converse will usually be the point closest to the light generating unit.

The reflective element may have a constant cross-section along an axis perpendicular to the first line-shaped light beam, or may have a variable cross-section along this axis.

The shape of the mirror may be selected in accordance with the shape and/or properties of the optical element, such that the projected line of light on the surface has a uniform light distribution. The uniformity of the projected line of light is here defined in terms of the variation in illuminance I as the following ratio:

$$I_{var} = (I_{max} - I_{min}) / (I_{max} + I_{min})$$

where $I_{max}$ is the maximum luminous intensity (measured in Candela) within the line of light, and $I_{min}$ is the minimum luminous intensity (measured in Candela) within the line of light. A lower value of this variation $I_{var}$ indicates a higher uniformity U, and vice versa. A line of light may be considered uniform if this ratio $I_{var}$ is less than 30% over the central part of the line, said central part being defined as the portion within two points of the line of light chosen at equal curvilinear distance of the center of the line of light and such as the length of the central part corresponds to 80% of the total length of the line of light. In fact, in such a case, a line of light may appear to be roughly uniform to a human eye.

According to an exemplary embodiment, the optical element is a standard Powell lens with a flat end, and the reflective element is a substantially V-shaped mirror with concave ends. "Concave end", here, means that at least starting at a certain distance from a deepest point of the "V", the mirror surface has a curvature which reflects parallel incoming rays to be at least somewhat convergent. The remaining part of the V is not limited to having a flat surface, however, and may also be somewhat concave, or convex, or may have a (gradually) varying curvature.

A standard Powell lens creates a straight, uniform line of light by fanning out light from the one or more light sources in one dimension. The fan angle of the Powell lens is determined by the index of refraction of the substrate used and the roof angle of the Powell lens, and it describes how wide the first light beam is fanned out over. However, even if the line of light emitted from such a standard Powell lens is uniform, this does not by itself ensure that the line of light will still be uniform after being reflected by the reflective element, and/or that it will result in a uniform line of light once it is projected on the surface. This may for instance not be the case if because the rays of the second light beams are emitted at a large angle of incidence on the surface, and thus may be spread over a larger area of the surface leading to less bright area towards the ends of the line of light. By using a mirror with concave ends, the density of light rays at the ends of the line of light is increased and the uniformity of the projected light is improved compared to the situation wherein a mirror without concave ends is used instead.

According to an alternative embodiment, the optical element is a modified Powell lens with a V-shaped end, and the reflective element is then preferably a V-shaped mirror with substantially straight ends.

A standard Powell lens may be modified such as to create a straight, but non-uniform line of light, for example by using aspheric shapes on both sides of the Powell lens. In such a way, the density of light rays at the ends of the line of light may be increased before the line of light is reflected by the reflective element, instead of after the reflective element as described in the previous embodiment. Therefore, the aspheric shapes of the modified Powell lens play a similar role as the concave ends of the mirror in the previous embodiment and a similar technical effect is obtained, i.e. the uniformity of the projected light is improved compared to the situation wherein a standard Powell lens is used instead. In this situation, the reflective element may not need to additionally affect and/or correct the uniformity. Further, the inventors of the present invention have found that this embodiment results in a substantially uniform light distribution of the projected line for a broader range of distances between the optical element and the reflective element.

Of course, in other embodiments, the desired uniformity of the line projected on the surface may be achieved, preferably for a range of distances between the optical element and the reflective element, by both the optical element and the reflective element affecting the uniformity in complementary ways, for example by choosing an optical element and a reflective element such that the combination of the properties of the optical element with the complete shape of the reflective element (i.e. the shape of the center portion as well as the shape of the end portion of the reflective element) lead to a desired uniformity. Therefore, depending on the properties of the optical element, the shape of the reflective element, for instance the shape of the two ends of a substantially V-shaped mirror, may correspond to a concave shape, a convex shape or any other shape needed achieve a substantially uniform light distribution of the projected light. Further, in embodiments wherein the optical element and the reflective element are inside an enclosure, the properties of the enclosure itself may additionally be taken into account to achieve a desired uniformity and/or curvature of the projected light.

According to an exemplary embodiment, the reflective element is a substantially V-shaped mirror of which the opening angle is adjustable, for instance a substantially V-shapes mirror of which the shape can be changed so that the two "sides" of the V form a more acute or a more obtuse angle. In such embodiments, a length of the line of light on the surface may be adjusted by adjusting the opening angle of the V-shaped mirror.

In that manner, the opening angle of the V-shaped mirror can be chosen to match a desired second opening angle of the second light beam that will lead to a desired length of the line of light on the projected surface and corresponding uniform distribution. For example, a larger second opening angle may be obtained by choosing a larger opening angle of the V-shaped mirror, and thus leading to a line of light with a greater length without increasing the length of the projection path. The adjusting of the opening angle of a V-shaped mirror may be sufficient by itself, but may also be used in combination with an adjusting of the distance to achieve a higher length and/or a broader range of possible lengths.

According to an exemplary embodiment, the system further comprises a second adjusting unit configured to adjust an angle between the optical element and the surface and/or an angle between the reflective element and the surface. In many cases, adjusting the angle between the optical element and the surface will be achieved by adjusting the angle of the light generating unit as a whole and the surface. However, in some embodiments it may be considered to have a second adjusting unit which is capable of adjusting the angle between only the optical element and the surface, which is capable of individually adjusting an angle of the optical element and the surface and the relative angle of the one or more light source with respect to the optical element, and/or which is capable of adjusting the relative angle between the optical element and the one or more light sources.

In that manner, the position of the line of light on the surface as well as the shape of the line of light may also be adjusted. In fact, by adjusting both angles by different amounts, such that the relative angle between the optical element and the reflective element changes, the shape of the line of light may be adjusted, for instance depending on the shape of the reflective element. Further, by adjusting both angle by the same amount, (only) the position of the line of light on the projection surface may be changed in certain embodiments, since the first light beam may still be incident on the reflective element in the same manner, but the second light beam may be reflected away towards a different position on the projection surface.

According to a further embodiment, the second adjusting unit is configured to shift the incidence area of the first light beam on the reflective element.

By shifting the incidence area of the first light beam on the reflective element, a different shape of the line of light may be obtained without requiring a different reflective element. For example, if the first light beam is incident perpendicular on a V-shaped reflective element, the line of light may correspond to a straight line. However, if the first light beam is incident on the V-shaped reflective element at an angle other than 90 degrees, the line of light may correspond to a kinked or curved line. In some embodiments, the reflective element may also be shaped so that shifting the incidence area leads to the incidence area having a different shape.

According to a further embodiment, the second adjusting unit is configured such that, by adjusting the angle between the optical element and the surface and/or the angle between the reflective element and the surface, a position, a shape and/or curvature of the line projected on the surface can be adjusted.

The shape of the mirror and the angle between the optical element and the reflective element determine the radius of curvature of the line of light on the projected surface; the more the angle of incidence of the first light beam deviates from being perpendicular, the smaller the radius of curvature of the line projected on the surface. The inventors of the present invention have found that straight ends of the mirror create a kinked like shape of the curve, while a more round shaped mirror creates a more circular like shape of the curve on the projection surface.

According to an exemplary embodiment, the second light beam, when projected on the surface, forms any one of the following: a continuous line, a dashed line, a straight line, a curved line, a kinked line, or a combination thereof.

In that manner, the second light beam, once projected on the surface, can reproduce well-known road surface markings. For example, in Europe, a line marking is often used to separate traffic driving in the same and in opposite directions, solid double lines are used to indicate that drivers are not permitted to change lanes and a solid white line with a broken white line indicates that crossing the line is allowed from the lane closer to the broken line. Furthermore, some line markings may be curved due to the curvature of the road, and the second light beam can be projected to match the curved line marking either by projecting a curved line with a corresponding curvature, or multiple continuous line and/or kinked line at different segment of the road.

According to an exemplary embodiment, the one or more light sources comprise any one of the following: a point source of light, a laser diode, a diode-pumped solid-state laser, or a combination thereof. Note that to project multiple lines, the lighting system may include more than one light source, more than one optical element, more than one light generating unit, and/or more than one reflective element. In such cases, more than one adjusting unit may also be present.

Depending on the choice of light source and/or optical element, many different shapes of the first light beam can be obtained. In fact, starting from a point source of light, for example light passing through a pinhole or other small aperture viewed from a distance much greater than the size of the hole, or from an ideal light source such as a laser light source, various shapes of the first light beam can be obtained by means of an appropriate optical element, which may be the optical element previously discussed or an additional optical element (which is then considered to be part of the light source). For example, starting from a collimated light beam emitted from one of the one or more light sources, a straight and uniform line-shaped light beam with a first opening angle can be obtained using a line generating optical element, such as a standard Powell lens, fanning out the collimated beam in one dimension.

The optical element may comprise any one of the following: a collimation optics, a freeform optics, such as a Powell lens, a micro lens array, such as a Fresnel lens, a diffractive optical element, a MEMS scanning system, a Galvano scanning system, or a combination thereof.

In that manner, the light distribution of the first light beam can be adjusted. In an exemplary embodiment wherein the optical element comprises a MEMS scanning system or a Galvano scanning system, both the length of the line of light as well as the light distribution can be adjusted by controlling these systems.

As mentioned, the system may be particularly useful when the surface is a road surface comprising a road marking.

The road surface may be a retroreflective road surface. In such cases, the lighting system may advantageously be configured to project one or more road markings in a direction of a traffic on the road surface.

In that manner, the projected one or more road markings is retroreflected by the retroreflective road surface in the direction of road users travelling on the road surface. Therefore, the line of light appears brighter to the driver since the line of light is reflected towards the vehicle and its driver. In use, the first adjusting unit may make adjustment of the projected line of light possible according to the position and arrangement of the road markings.

In embodiments including a second adjusting unit, the second adjusting unit is preferably configured to enable further adjustment of the projected line of light according to the position and arrangement of the road markings, preferably also according to the curvature and/or shape of the road markings. According to a second aspect of the invention, there is provided one or more luminaire poles comprising the lighting system for projecting a line of light on a surface, as described in the above-mentioned embodiments of the first aspect of the invention.

According to a third aspect of the invention, there is provided a method for configuration of a line of light projected on a surface. The method comprises providing a system comprising a light generating unit, comprising one or more light sources and an optical element configured to receive light from the one or more light sources and to emit a first, line-shaped light beam with a first opening angle; and a reflective element, configured to receive the first light beam and to reflect the received first light beam towards the surface as a second light beam with a second opening angle, which is larger than the first opening angle, emitting a first light beam with a first opening angle; adjusting a length of the line of light on the surface by adjusting the distance between the optical element and the reflective element.

The method may further comprise adjusting a position of the line of light on the surface by adjusting an angle between the optical element and the surface and/or an angle between the reflective element and the surface.

The method may further comprise adjusting a curvature and/or shape of the line of light on the surface by shifting the incidence area of the first light beam. By shifting the incidence area of the area of the first light beam, it is meant that the first light beam will be incident on a different portion of the reflective element. Alternatively or in addition, the method may further comprise adjusting the curvature and/or shape of the line of light on the surface by adjusting an angle between the one or more light sources and the optical element.

The surface may advantageously be a road surface comprising a road marking and the method then further comprises adjusting the position, curvature and/or shape of the line of light to correspond to a position of the road marking; and/or adjusting the length of the line of light to correspond to a length of the road marking.

The skilled person will understand that the hereinabove described technical considerations and advantages for the system embodiments also apply to the above-described corresponding method embodiments, *mutatis mutandis.*

## BRIEF DESCRIPTION OF THE FIGURES

This and other aspects of the present invention will now be described in more detail, with reference to the appended drawings showing a currently preferred embodiment of the invention. Like numbers refer to like features throughout the drawings.

Figures 1A-1B illustrate schematically an exemplary embodiment of a pole comprising a lighting system for projecting a line of light on a surface, wherein the surface is a traffic surface comprising surface markings.

Figures 2A-2C illustrate schematically an exemplary embodiment of a pole comprising a lighting system for projecting a line of light on a surface, wherein the lighting system comprises a first adjusting unit and a second adjusting unit; Fig. 2D and 2E illustrate an alternative embodiment of the first and second adjusting unit.

Figures 3A-3C illustrate schematically the distribution of rays in three schematically depicted exemplary embodiments.

Figures 4A-4C illustrate schematically the distribution of rays for different choices of relative angle between the optical element and the reflective element, according to exemplary embodiments.

## DESCRIPTION OF THE EMBODIMENTS

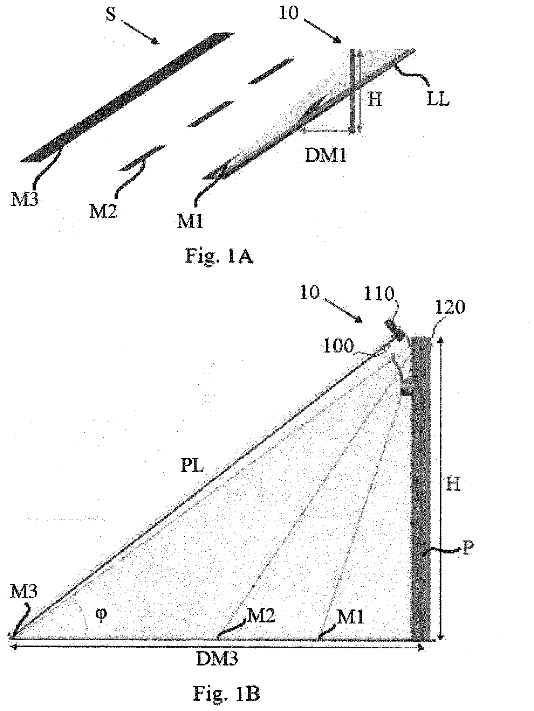

Figures 1A-1B illustrate schematically an exemplary embodiment of a pole comprising a lighting system for projecting a line of light on a surface, wherein the surface is a traffic surface comprising surface markings.

Referring to Figures 1A-1B, there is provided a lighting system 10 for projecting a line of light LL on a surface S. The system comprises a light generating unit 100, a reflective element 110 and a first adjusting unit 120. The light generating unit 100 comprises one or more light sources and an optical element (not shown). The optical element is configured to receive light from the one or more light sources and to emit a first, line-shaped light beam with a first opening angle. The reflective element 110 is configured to receive the first light beam and to reflect the received first light beam towards the surface as a second light beam with a second opening angle, which is larger than the first opening angle, in order to project a line of light LL on the surface S. The first adjusting unit 120 is configured to adjust a distance D between the optical element 102 and the reflective element 110.

The surface S may correspond to a traffic surface. The term "traffic surface" may refer to any space intended to sustain vehicular and/or pedestrian traffic, such as a road surface ((sub)urban streets or boulevards, roads, highways, countryside roads or paths, etc.), a biking or skating surface (bikeways, skateparks, ways dedicated to light electric vehicles (LEVs), micro-EVs, etc.), a pedestrian surface (public places, markets, parks, pathways, sidewalks, zebra crossings, etc.), a railway surface (railways tracks for trams, trains, etc.), a water surface (waterways for boats, jet skis, etc.), or a way surface dedicated to aircrafts, such as a taxiway or a runway. The surface S may comprise one or more surface markings M1-M3 (e.g. an arrow road marking, a bike-only lane, a one-way lane, etc.) instructing vehicles and/or pedestrian to behave appropriately on the traffic surface (e.g. drive forward, turn left, do not cross the line, etc.). For example, the first surface marking M1 and the third surface marking M3 may correspond to a continuous line instructing vehicles to travel within the surface S, and the second surface marking M2 may correspond to a dashed line allowing vehicles to change lane, as illustrated in Figure 1A. While in Fig. 1A the lighting system is provided to the side of the traffic surface, it could also be provided on or above the traffic surface, for instance being mounted on existing infrastructure, such as overhead road signage and the like.

By reflecting the received first light beam towards the surface S as a second light beam with a second opening angle larger than the first opening angle, the rate at which the length of the projected line of light LL changes as a function of the position of the light beam within the projection path is increased. The projection path is defined here as the path followed by light rays at the center of the line of light to reach the surface S on which the line of light LL is projected. Therefore, a line of light LL with a greater length is obtained without significantly increasing the length PL of the projection path. Moreover, by adjusting a distance D between the optical element 102 and the reflective element 110, the length of the line of light LL can be adjusted since the length PL of the projection path is modified.

The first adjusting unit 120 is configured such that, by adjusting the distance D between the optical element 102 and the reflective element 110, a length of the line of light LL projected on the surface S is changed. This has the advantage that the same lighting system may be installed at various heights H and/or at various distances DM1 from the intended projection surface, and can then be easily adjusted during or after installation to project a line of light on the surface with the desired length.

For example, as illustrated in Figure 1B, the length PL of the projection path may be modified by the first adjusting unit 120, by adjusting the distance D between the optical element 102 and the reflective element 110, e.g. by adjusting the height at which the first adjusting unit 120, on which in this embodiment the reflective element is mounted, is fixed on the pole P. Preferably, the length PL of the projection path is significantly greater than the distance change between the optical element 102 and the reflective element 110 such that small adjustments of distance D can result to a more significant change in the length of the line of light LL on the surface S on which the line of light LL is projected. Moreover, in some embodiments wherein the line of light LL is reflected by the reflective element 110 in a direction substantially opposite to the direction of incidence of the first light beam as illustrated in Figure 1B, the previous effect is enhanced due to the almost roundtrip of the light beam between the light generating unit 100 and the reflective element 110.

As illustrated in the embodiments of Figures 1A-1B, one or more luminaire poles P may comprise the lighting system 10 for projecting a line of light LL on a surface S, as described in the above-mentioned embodiments. The lighting system 10 may be connected to or close to a top end of the one or more luminaire poles P. The lighting system may be provided in or on the pole P of the luminaire (see Figure 1B). For example, the lighting system 10 may be connected to the pole P through a bracket (see Figure 1B). It may be considered to adapt the lighting system such that it can be installed on existing lighting poles.

One or more luminaire poles P may comprise the lighting system 10 such as the lighting system 10 at a height H above the projection surface S. The height H is defined here as the distance between the lighting system 10 and the closest point on surface S, or on the plane which includes surface S. The projection length PL depends on the height H and the distance between the pole P and the position on which the line of light LL is projected. Referring to Figure 1B, the projection length PL is larger in the case wherein the line of light LL is projected on the third road marking M3 at a distance DM3 from the pole P than the case wherein the line of light LL is projected on the first road marking M1 at a distance DM1 from the pole P as illustrated in Figure 1A, since the distance DM3 is higher to the distance DM1.

Note that, since Fig. 1B is a side-view, the path length PL as depicted in this figure is the shortest path length, which - in cases in which a line is projected symmetrically to both sides of the lighting system, as in this figure - is the path of light rays corresponding to the center of the line. In most cases, the path length will gradually increase from this center to the edges of the line.

Further, the lighting system 10 may comprise a second adjusting unit 130 (not shown) configured to adjust an angle β between the light generating unit and the surface and/or an angle α between the reflective element and the surface.

The lighting system 10 may project a line of light LL onto the surface S either to replace the one or more surface markings M1-M3 or in addition to, preferably then on top of, the existing surface markings M1-M3 to enhance visibility thereof. For example, the line of light LL may be projected on top of the first surface marking M1, as illustrated in Figure 1A, or may be projected on top of a more distant surface marking, such as the third surface marking M3, as illustrated in Figure 1B.

The second adjusting unit 130 may enable further adjustment of the projected line of light according to the position and arrangement of the road markings, preferably also according to the curvature and/or shape of the road markings. In that manner, the line of light LL may be projected on top of the first surface marking M1, as illustrated in Figure 1A, or may be projected on top of a more distant surface marking, such as the third surface marking M3, as illustrated in Figure 1B. In typical embodiments, such as the one shown in this figure, adjusting both angle $\alpha$ and $\beta$ by the same amount will result in a change in the angle of incidence $\varphi$ between the projection path PL and the surface S, which will mainly lead to the position of the line of light on the projection surface being changed, since the first light beam may still be incident on the reflective element in the same manner, but the second light beam may be reflected away towards a different position on the projection surface. However, this will also depend on the specifics of the system, in particular the shape of the reflective element. Note furthermore that such changes in the position will often be associated with a change in the length of the line as well, which may then need to be compensated for using the first adjusting unit.

The system 10 may thus be used to configure the line of light LL projected on the surface S, for example to match a set of desired properties such as length, uniformity, and shape of the line of light LL. Referring to Figure 1A, the line of light LL may correspond to a straight light

The adjustment (or fit, or mapping) of the line of light LL to one of the one or more surface markings M1-M3 may involve operations such as adjusting the position and/or the shape and/or the length of the line of light LL on the surface S, using the first adjusting unit and/or the second adjusting unit.

In that manner, personnel responsible for initial installation of the lighting system 10 can adjust the line of light LL easily by preferably following three successive steps. First, the shape and/or curvature of the line of light LL may be adjusted by the second adjusting unit 130, e.g., by adjusting both angle $\alpha$ and $\beta$ by different amount such that the shape of the line of light LL may be adjusted depending on the shape of the reflective element. Then, the position of the line of light LL may be adjusted by the second adjusting unit 130, e.g. by adjusting both angle $\alpha$ and angle $\beta$ by the same amount, such that the position of the line of light on the projection surface is changed without substantially changing the shape of the line of light LL - note, however, that if the line was already kinked or curved, adjusting both the angle $\alpha$ and angle $\beta$ by the same amount may also have an effect on the shape. Finally, the length of the line of light LL may be adjusted with the aid of the first adjusting unit. The order of these three successive steps has the advantage that the line of light LL has the desired properties in only three steps and we avoid changing back and forth properties of the line of light LL, as it would be the case if we first changed the length of the light LL without positioning the line of light first. However, it should be clear that a different order of adjustments may also be used; furthermore, it is noted that the second adjusting unit may comprise a number of sub-units, for instance sub-units which make it possible to independently adjust $\alpha$ and $\beta$ as well as in some cases an additional sub-unit which makes it possible to simultaneously adjust $\alpha$ and $\beta$ while keeping the relative angle between the optical element and the reflective element constant. In a similar manner, personnel responsible for repairing, replacing and maintaining can proceed in the same manner to adjust the line of light LL with the desired properties.

If needed, the proposed system may be used to send warning signals in case of a dangerous or potentially dangerous situation. For example, the color of the line of light LL may be changed from green to blue in case of slippery conditions of the surface S. The line of light intensity can be continuous, or adapted to circumstances, or even modulated at frequencies not visible to the human eye to provide information to a road user, e.g. to a car. This information, which may be what is commonly referred to as infrastructure-to-vehicle information, can be related to actual road conditions, traffic information, traffic signs, etc.

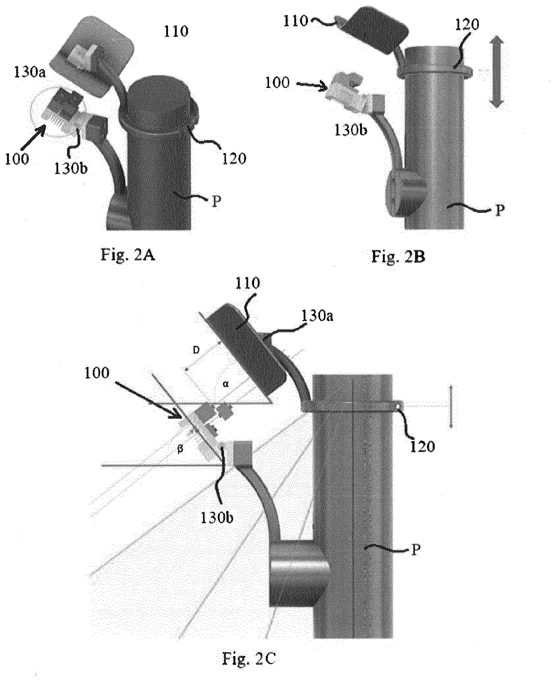

Figures 2A-2C illustrate schematically an exemplary embodiment of a pole comprising a lighting system for projecting a line of light on a surface, wherein the lighting system comprises a first adjusting unit and a second adjusting unit.

Similar components have been indicated by the same reference numbers as in the previous embodiments; and to avoid repetition, description of elements already included above will not be repeated.

In the embodiment shown in Figures 2A-2C, the reflective element 110 is a substantially V-shaped mirror, of which the cross-section is constant along an axis which is substantially perpendicular to the line-shaped light beam emitted by light generating unit 100. Note that "V-shaped" as used in this application is not limited to shapes with a sharp transition between one side of the "V" and the other, but explicitly includes shapes such as the one shown in these figures, in which the bottom of the "V" is at least somewhat rounded. Such a rounded shape may in particular aid in achieving the desired uniformity in combination with the properties of the optical element. In any case, the bottom of the V will have a convex shape.

This mirror 110 is mounted on adjusting unit 120, which is embodied as a ring-shaped element which may slide along the height of the pole P. In these embodiments, then, the adjusting of the distance between the optical element 102 and the mirror 110 is achieved by adjusting the height of the mirror 110; however, alternately or additionally the light generating unit 100 could be mounted on a similar element, and adjusting the distance could be achieved by adjusting the height of the light generating unit 100, or of both the light generating unit 100 and the mirror 110. An advantage of the depicted embodiment may be that the mirror is a purely mechanical and generally sturdier element. Furthermore, it is noted that the length of the line depends not only on the distance between the optical element 102 and the mirror 110, but also (albeit less strongly) on the path length PL between the mirror 110 and the projection surface; an additional advantage of adjusting the height of the mirror may be that D and PL are both increased.

In the embodiment shown in Figures 2A-2C, the lighting system 10 further comprises a second adjusting unit 130 configured to adjust an angle β between the light generating unit 100 and the surface S and an angle α between the reflective element 110 and the surface S.

In the shown embodiment, the second adjusting unit comprises a first sub-unit 130a for adjusting the angle α and a second sub-unit 130b for adjusting the angle β. In the shown embodiment, these sub-units 130a and 130b are embodiment are simple hinges, which allow the angle to be adjusted only with respect to a single axis. Such a simple embodiment may already allow for a useful range of adjustments. However, in other embodiments (slightly) more sophisticated elements may be used, for instance ball-joints, which make additional types of adjustment of α and/or β possible.

In the embodiment shown in Figures 2A-2C, the sub-units 130a and 130b are configured to make it possible to shift the incidence area of the first light beam on the reflective element 110. Note that in this embodiment, if α and β are both changed by the same amount, the incidence area can be shifted while keeping the same incidence angle of the first light beam on the mirror. Since the mirror in this embodiment has a constant cross-section along the direction of this shift, this will not significantly affect the shape of the projected line, which may be considered desirable. However, it is noted that in other embodiments the reflective element may have a variable cross-section to allow for a wider variety of results.

By shifting the incidence area of the first light beam on the reflective element 110, a different shape of the line of light LL may be obtained without changing the shape of the reflective element 110. For example, if the first light beam is incident on a V-shaped reflective element 110 as illustrated in Figures 2A-2C, the line of light LL may correspond to a straight line. However, if the first light beam is incident on the V-shaped reflective element 110 with an angle, the line of light LL may correspond to a kinked line.

In the shown embodiment, if α and/or β are changed such that the relative angle between the optical element and the mirror changes, not only the incidence area but also the angle of incidence will change. In the case of a V-shaped mirror, such as the one shown, a straight line may be achieved if α and β are such that the first line-shaped light beam hits the mirror at a right angle, and a kinked line may be achieved if the light beam hits the mirror at another angle, with a sharper kink resulting from a higher deviation from the straight angle.

Thus, by adjusting the angle β between the light generating unit and the surface and/or the angle α between the reflective element and the surface, a position, shape and/or curvature of the line projected on the surface are adjusted. The specific relationship between the adjustments by the second adjusting unit and the characteristics of the line will of course depend on the specific embodiment, in particular on the shape and arrangement of the reflective element. The inventors of the present invention have found that the bigger the difference between α and β, the sharper the kink or the smaller the radius of the more circular curve. Furthermore, the overall shape of the curve will in many embodiments be quite dependent on the shape of the central part of the reflective element. In particular, a V-shaped mirror with a very sharp "point" of the V will in many cases result in a kinked line of light, whereas a more gradual, rounded convex "point" will lead to a more gradually curving line.

In the embodiments shown in Figures 2A-2C, sub-units 130a and 130b make it possible to adapt angle α and angle β independently. However, to facilitate the adjustments described above in which the relative angle (i.e., the difference α-β) stays the same, it could be considered to provide, either as an alternative to sub-units 130a and 130b or in addition to these units, a further adjusting (sub-) unit which makes it possible to adjust both α and β at the same time by a same amount.

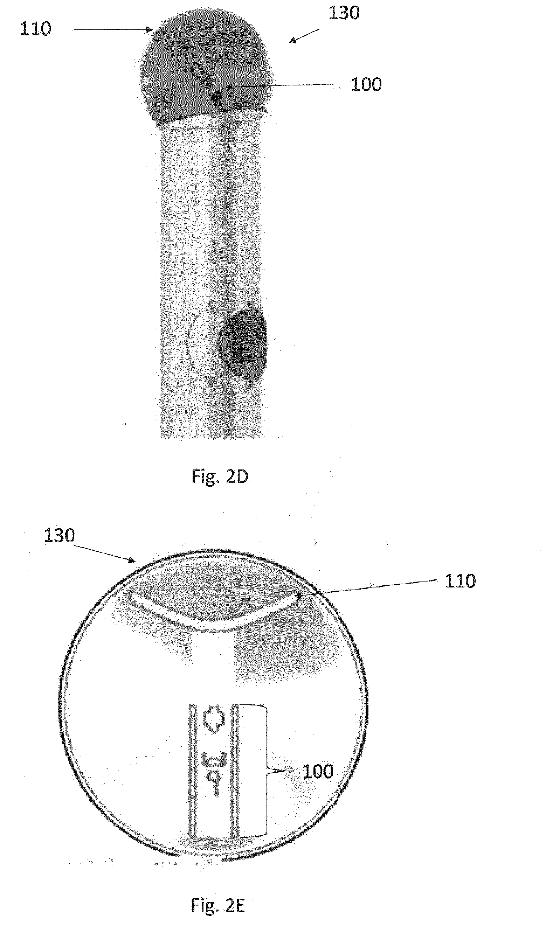

An alternative embodiment of the first and second adjusting unit is schematically illustrated in Fig. 2D and 2E, wherein Fig. 2D is a perspective view of the lighting system on a luminaire pole and Fig. 2E is a cross-section of this embodiment. In this embodiment, the lighting system includes or is provided inside a housing, which is attached to the top of the luminaire pole as a ball-joint structure. This ball-joint structure here provides (at least part of) the second adjusting unit 130, and makes it possible to rotate the lighting system in various directions, so as to adjust angle α and angle β together. The first adjusting unit is not explicitly shown, but makes it possible, looking at Fig. 2E, to adjust the distance between the reflective element 110 and the light generating unit 100.

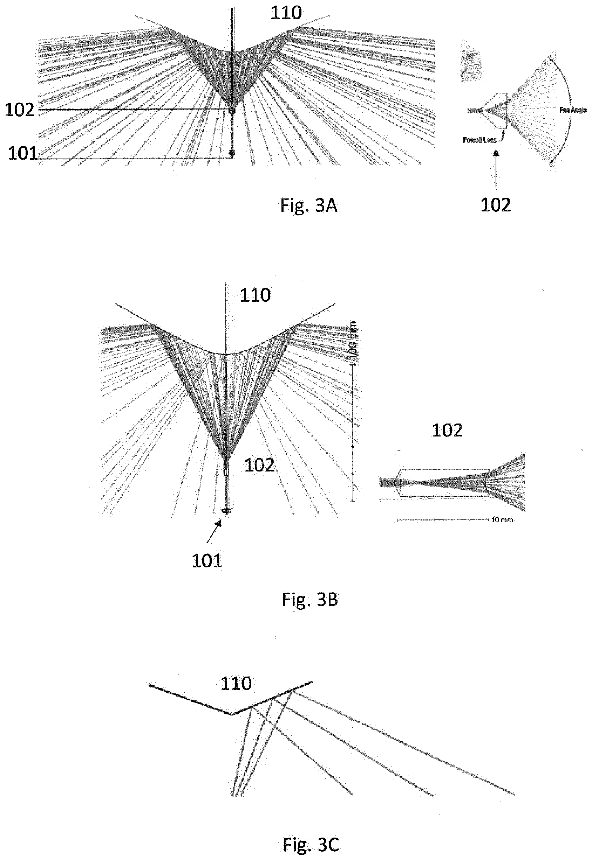

Figures 3A and 3B illustrate the distribution of rays of light for two specific choices of optical element 102 and reflective element 110. Both figures show the plane in which the line-shaped first light beam and second light beam are propagated. In these examples, the first and second light beam propagate in a same plane; however, as should be clear in the above, this may not be the case for all embodiments, and for many embodiments may only be the case in certain configurations, in particular for certain relative values of the angle α and the angle β.

Figures 3A and 3B illustrate that by selecting the shape of the reflective element 110 is in conjunction with the shape and/or properties of the optical element 120, it may be ensured that the projected line of light LL on the surface S has a substantially uniform light distribution.

In Figure 3A, the optical element 102 is a typical, "off the shelf" Powell Lens, which fans out received light into a line-shaped light beam with a substantially uniform light distribution within a first fan or opening angle (as illustrated in the more detailed image on the right). The fan angle of such a Powell lens is generally determined by the index of refraction of the substrate used and the roof angle of the Powell lens, and it describes how wide the first light beam is fanned out over. However, if such a beam is further reflected with a larger opening angle, for instance using a generic V-shaped mirror, non-uniformity may be introduced in the eventual projected line, since towards the edges of the projected line the path length that the light rays need to take rapidly increases. To account for this, the reflective element 110 is advantageously selected to be, as illustrated in this figure, a substantially V-shaped mirror of which the ends are slightly concave. In this way, the density of light rays at the ends of the line of light LL is increased and the uniformity of the projected light is improved compared to the situation wherein a mirror without concave ends is used instead. Further, the line of light remains substantially uniform for a broad range of distance between the optical element and the reflective element.

As illustrated in Figure 3B, the optical element may also correspond to a modified Powell lens with a V-shaped end, and the reflective element may then correspond to a V-shaped mirror with straight ends.

A standard Powell lens may be modified such as to create straight, but non-uniform line of light, for example by using aspheric shapes on both sides of the Powell lens. Therefore, the density of light rays at the ends of the line of light as well as other portion wherein the density of light is low may be increased before the line of light is reflected by the reflective element, instead of after the reflective element as described in the previous embodiment. Therefore, the aspheric shapes of the modified Powell lens play a similar role as the concave ends of the mirror in the previous embodiment and a similar technical effect is obtained, i.e. the uniformity of the projected light is improved compared to the situation wherein a standard Powell lens is used instead. The combination of the shape of the Powell lens and the mirror aim to create a uniform distribution for different distance between the optical element and the reflective element.

Various alternatives may of course be considered. In particular, while the figures described above assume a line will be projected symmetrically to both sides of the lighting system, this need not always be the case, and in fact in the case of projection of a line on a retroreflective surface, it may be advantageous to project a line substantially towards one of the sides of the lighting system.

Such a situation is depicted schematically in Fig 3C. In this figure, a substantially V-shaped mirror is shown, and this may indeed still be advantages, for instance to provide a single system which may, through adjustment of the relative position and angle of the light generating unit and this mirror, be configured to project towards one side or towards the other (or towards both). However, to project mainly to one side, only about half of such a mirror is required. Therefore, the reflective element may be selected to be a flat or only gradually curved mirror instead.

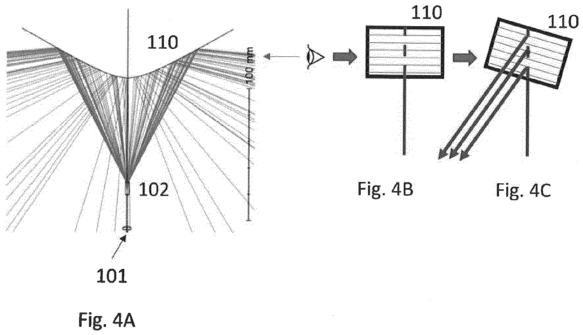

Figures 4A-4C illustrate schematically the distribution of rays for different choices of relative angle between the optical element and the reflective element, according to exemplary embodiments.

Figures 4B and 4C illustrate the distribution of rays of light for two specific choices of relative angle between the optical element 102 and the reflective element 110. Both figures show a side-view of the V-shaped mirror of Figure 4A (corresponding to Figure 3B), and illustrate that by shifting the incidence area of the first light beam on the reflective element 110, a different shape of the line of light LL may be obtained without changing the shape of the reflective element 110. As shown by Figure 4C, shifting the incidence area of the first light beam may correspond to choosing a different relative angle between the optical element and the reflective element.

In fact, in the case of a V-shaped mirror, such as the one shown by Figure 4A, a straight line may be achieved in Fig. 4B since $\alpha$ and $\beta$ are such that the first line-shaped light beam hits the mirror at a right angle, and a kinked or curved line may be achieved in Fig. 4C since the light beam hits the mirror at another angle, with a sharper kink/curve resulting from a higher deviation from the straight angle. In fact, as shown by Figure 4C, portion of the projected line of light LL may reach the surface at different transverse distance from the pole, leading to a kinked/curved line.

Whilst the principles of the invention have been set out above in connection with specific embodiments, it is to be understood that this description is merely made by way of example and not as a limitation of the scope of protection which is determined by the appended claims.

## Claims

1. A lighting system (10) for projecting a line of light (LL) on a surface (S), said lighting system (10) comprising:

   a light generating unit (100) comprising:

   > one or more light sources (101), and
   > an optical element (102) configured to receive light from the one or more light sources (100) and to emit a first, line-shaped light beam with a first opening angle;
   > said lighting system being **characterized by** further comprising:

   > a reflective element (110) configured to receive the first light beam and to reflect the received first light beam towards the surface as a second light beam with a second opening angle, which is larger than the first opening angle, in order to be able to project a line of light (LL) on the surface (S);
   > a first adjusting unit (120) configured to adjust a distance (D) between the optical element (102) and the reflective element (110).

2. The system of claim 1, wherein the first adjusting unit (120) is configured such that, by adjusting the distance (D) between the optical element (102) and the reflective element (110), a length of a line of light (LL) projected on the surface (S) is changed; wherein increasing the distance (D) between the optical element (102) and the reflective element (110) preferably increases the length of the line of light (LL) projected on the surface (S).

3. The system of any of the previous claims, wherein the reflective element (110) corresponds to any one of the following: a V-shaped mirror, a substantially V-shaped mirror with concave ends, a cone-shaped mirror, or a cylindrical-shaped mirror.

4. The system of any of claims 1-3, wherein the optical element (102) either:

is one of a standard Powell lens with a flat end, and wherein the reflective element (110) is a substantially V-shaped mirror with concave ends, or a modified Powell lens with a substantially V-shaped exit surface, and wherein the reflective element (110) is a V-shaped mirror with straight ends; or comprises any one of the following: a collimation optics, a freeform optics, such as a Powell lens, a micro lens array, such as a Fresnel lens, a diffractive optical element, a MEMS scanning system, a Galvano scanning system, or a combination thereof.

5. The system of any of the previous claims, wherein the reflective element (110) is a V-shaped mirror of which an opening angle ($\theta$) is adjustable; wherein a length of the line of light (LL) on the surface is preferably adjusted by adjusting the opening angle ($\theta$) of the V-shaped mirror.

6. The system of any one of the previous claims, further comprising a second adjusting unit (130) configured to adjust an angle ($\beta$) between the light generating unit (100) and the surface (S) and/or an angle ($\alpha$) between the reflective element (110) and the surface (S); wherein the second adjusting unit (130) is preferably configured to shift the incidence area of the first light beam on the reflective element (110), and/or such that, by adjusting the angle ($\beta$) between the light generating unit (100) and the surface (S) and/or the angle ($\alpha$) between the reflective element (110) and the surface (S), a position, shape and/or curvature of the line projected on the surface (S) are adjusted.

7. The system of any one of the previous claims, wherein the second light beam, when projected on the surface (S), forms any one of the following: a continuous line, a dashed line, a straight line, a curved line, a kinked line, or a combination thereof.

8. The system of any one of the previous claims, wherein the one or more light sources (101) comprise any one of the following: a point source of light, a laser diode, a diode-pumped solid-state laser, or a combination thereof.

9. The system of any of the previous claims, wherein the surface (S) is a road surface comprising a road marking.

10. The system of claim 9, wherein the road surface is a retroreflective road surface, and wherein the lighting system (10) is configured to project one or more road markings in a direction of a traffic on the road surface; and, wherein the first adjusting unit (120) is preferably configured to enable adjustment of the projected line of light (LL) according to the position and arrangement of the road markings.

11. The system of claim 10 in combination with claim 6, wherein the second adjusting unit (130) is configured to enable further adjustment of the projected line of light (LL) according to the position and arrangement of the road markings, preferably also according to the curvature and/or shape of the road markings.

12. One or more luminaire poles comprising the system (10) of any one of the previous claims.

13. A method for configuration of a line of light (LL) projected on a surface (S), said method comprising:

providing a system comprising a light generating unit (100), comprising one or more light sources (101) and an optical element (102) configured to receive light from the one or more light sources and to emit a first, line-shaped light beam with a first opening angle; and a reflective element, configured to receive the first light beam and to reflect the received first light beam towards the surface as a second light beam with a second opening angle, which is larger than the first opening angle; projecting a line of light on the surface using the provided system; adjusting a length of the line of light on the surface by adjusting the distance (D) between the optical element and the reflective element.

14. The method of claim 13, said method further comprising:

adjusting a position of the line of light on the surface by adjusting an angle ($\beta$) between the light generating unit and the surface and/or an

angle ($\alpha$) between the reflective element and the surface; and/or,

adjusting a curvature and/or shape of the line of light on the surface by shifting the incidence area of the first light beam.

15. The method of claim 13 or 14, wherein the surface is a road surface comprising a road marking and wherein the method further comprises:

adjusting the position, curvature and/or shape of the line of light to correspond to a position of the road marking; and/or
adjusting the length of the line of light to correspond to a length of the road marking.

**Patentansprüche**

1. Beleuchtungssystem (10) zum Projizieren einer Lichtlinie (LL) auf eine Oberfläche (S), das Beleuchtungssystem (10) umfassend:
eine Lichterzeugungseinheit (100), umfassend:

eine oder mehrere Lichtquellen (101) und
ein optisches Element (102), das konfiguriert ist, um Licht von der einen oder den mehreren Lichtquellen (100) zu empfangen und einen ersten, linienförmigen Lichtstrahl mit einem ersten Öffnungswinkel auszusenden;
wobei das Beleuchtungssystem **dadurch gekennzeichnet ist, dass** es ferner umfasst:

ein reflektierendes Element (110), das konfiguriert ist, um den ersten Lichtstrahl zu empfangen und den empfangenen ersten Lichtstrahl als einen zweiten Lichtstrahl mit einem zweiten Öffnungswinkel, der größer als der erste Öffnungswinkel ist, in Richtung der Oberfläche zu reflektieren, um eine Lichtlinie (LL) auf die Oberfläche (S) zu projizieren;
eine erste Einstelleinheit (120), die konfiguriert ist, um einen Abstand (D) zwischen dem optischen Element (102) und dem reflektierenden Element (110) einzustellen.

2. System nach Anspruch 1, wobei die erste Einstelleinheit (120) derart konfiguriert ist, dass durch das Einstellen des Abstands (D) zwischen dem optischen Element (102) und dem reflektierenden Element (110) eine Länge einer Lichtlinie (LL), die auf die Oberfläche (S) projiziert wird, geändert wird; wobei ein Vergrößern des Abstands (D) zwischen dem optischen Element (102) und dem reflektierenden Element (110) vorzugsweise die Länge der Lichtlinie (LL) vergrößert, die auf die Oberfläche (S) projiziert wird.

3. System nach einem der vorstehenden Ansprüche, wobei das reflektierende Element (110) einem beliebigen der folgenden entspricht: einem V-förmigen Spiegel, einem im Wesentlichen V-förmigen Spiegel mit konkaven Enden, einem kegelförmigen Spiegel oder einem zylinderförmigen Spiegel.

4. System nach einem der Ansprüche 1 bis 3, wobei das optische Element (102) entweder:

eine Standard-Powell-Linse mit einem flachen Ende, und wobei das reflektierende Element (110) ein im Wesentlichen V-förmiger Spiegel mit konkaven Enden ist, oder eine modifizierte Powell-Linse mit einer im Wesentlichen V-förmigen Austrittsoberfläche ist, und wobei das reflektierende Element (110) ein V-förmiger Spiegel mit geraden Enden ist; oder
ein beliebiges der folgenden umfasst: eine Kollimationsoptik, eine Freiformoptik, wie eine Powell-Linse, ein Mikrolinsenarray, wie eine Fresnel-Linse, ein diffraktives optisches Element, ein MEMS-Scansystem, ein Galvano-Scansystem oder eine Kombination davon.

5. System nach einem der vorstehenden Ansprüche, wobei das reflektierende Element (110) ein V-förmiger Spiegel ist, dessen Öffnungswinkel ($\theta$) einstellbar ist;
wobei eine Länge der Lichtlinie (LL) auf der Oberfläche vorzugsweise durch das Einstellen des Öffnungswinkels ($\theta$) des V-förmigen Spiegels eingestellt wird.

6. System nach einem der vorstehenden Ansprüche, ferner umfassend eine zweite Einstelleinheit (130), die konfiguriert ist, um einen Winkel ($\beta$) zwischen der Lichterzeugungseinheit (100) und der Oberfläche (S) und/oder einen Winkel ($\alpha$) zwischen dem reflektierenden Element (110) und der Oberfläche (S) einzustellen;
wobei die zweite Einstelleinheit (130) vorzugsweise konfiguriert ist, um den Auftreffbereich des ersten Lichtstrahls auf dem reflektierenden Element (110) zu verschieben, und/oder derart, dass durch das Einstellen des Winkels ($\beta$) zwischen der Lichterzeugungseinheit (100) und der Oberfläche (S) und/oder des Winkels ($\alpha$) zwischen dem reflektierenden Element (110) und der Oberfläche (S) eine Position, Form und/oder Krümmung der Linie, die auf die Oberfläche (S) projiziert wird, eingestellt wird.

7. System nach einem der vorstehenden Ansprüche, wobei der zweite Lichtstrahl, wenn er auf die Oberfläche (S) projiziert wird, ein beliebiges der folgenden ausbildet: eine durchgezogene Linie, eine gestrichelte Linie, eine gerade Linie, eine gekrümmte Linie, eine geknickte Linie oder eine Kombination davon.

**8.** System nach einem der vorstehenden Ansprüche, wobei die eine oder die mehreren Lichtquellen (101) ein beliebiges der folgenden umfassen: eine Punktlichtquelle, eine Laserdiode, einen diodengepumpten Festkörperlaser oder eine Kombination davon.

**9.** System nach einem der vorstehenden Ansprüche, wobei die Oberfläche (S) eine Straßenoberfläche ist, umfassend eine Straßenmarkierung.

**10.** System nach Anspruch 9, wobei die Straßenoberfläche eine retroreflektierende Straßenoberfläche ist und wobei das Beleuchtungssystem (10) konfiguriert ist, um eine oder mehrere Straßenmarkierungen in einer Richtung eines Verkehrs auf die Straßenoberfläche zu projizieren; und, wobei die erste Einstelleinheit (120) vorzugsweise konfiguriert ist, um eine Einstellung der projizierten Lichtlinie (LL) gemäß der Position und Anordnung der Straßenmarkierungen zu ermöglichen.

**11.** System nach Anspruch 10 in Kombination mit Anspruch 6, wobei die zweite Einstelleinheit (130) konfiguriert ist, um eine weitere Einstellung der projizierten Lichtlinie (LL) gemäß der Position und Anordnung der Straßenmarkierungen zu ermöglichen, vorzugsweise ebenso entsprechend der Krümmung und/oder Form der Straßenmarkierungen.

**12.** Ein oder mehrere Lichtmasten, umfassend das System (10) nach einem der vorstehenden Ansprüche.

**13.** Verfahren für die Konfiguration einer Lichtlinie (LL), die auf eine Oberfläche (S) projiziert wird, das Verfahren umfassend:

Bereitstellen eines Systems, umfassend eine Lichterzeugungseinheit (100), umfassend eine oder mehrere Lichtquellen (101) und ein optisches Element (102), das konfiguriert ist, um Licht von der einen oder den mehreren Lichtquellen zu empfangen und einen ersten, linienförmigen Lichtstrahl mit einem ersten Öffnungswinkel auszusenden; und ein reflektierendes Element, das konfiguriert ist, um den ersten Lichtstrahl zu empfangen und den empfangenen ersten Lichtstrahl als einen zweiten Lichtstrahl mit einem zweiten Öffnungswinkel, der größer als der erste Öffnungswinkel ist, in Richtung der Oberfläche zu reflektieren; Projizieren einer Lichtlinie auf die Oberfläche unter Verwendung des bereitgestellten Systems; Einstellen einer Länge der Lichtlinie auf der Oberfläche durch das Einstellen des Abstands (D) zwischen dem optischen Element und dem reflektierenden Element.

**14.** Verfahren nach Anspruch 13, das Verfahren ferner umfassend:

Einstellen einer Position der Lichtlinie auf der Oberfläche durch das Einstellen eines Winkels ($\beta$) zwischen der Lichterzeugungseinheit und der Oberfläche und/oder eines Winkels ($\alpha$) zwischen dem reflektierenden Element und der Oberfläche; und/oder, Einstellen einer Krümmung und/oder Form der Lichtlinie auf der Oberfläche durch das Verschieben des Auftreffbereichs des ersten Lichtstrahls.

**15.** Verfahren nach Anspruch 13 oder 14, wobei die Oberfläche eine Straßenoberfläche ist, umfassend eine Straßenmarkierung, und wobei das Verfahren ferner umfasst:

Einstellen der Position, Krümmung und/oder Form der Lichtlinie, um einer Position der Straßenmarkierung zu entsprechen; und/oder Einstellen der Länge der Lichtlinie, um einer Länge der Straßenmarkierung zu entsprechen.

**Revendications**

**1.** Système d'éclairage (10) permettant de projeter une ligne de lumière (LL) sur une surface (S), ledit système d'éclairage (10) comprenant : une unité de génération de lumière (100) comprenant :

une ou plusieurs sources de lumière (101), et un élément optique (102) conçu pour recevoir la lumière provenant des une ou plusieurs sources de lumière (100) et pour émettre un premier faisceau de lumière en forme de ligne avec un premier angle d'ouverture ; ledit système d'éclairage est **caractérisé en ce qu'il** comprend en outre :

un élément réfléchissant (110) conçu pour recevoir le premier faisceau de lumière et pour réfléchir le premier faisceau de lumière reçu vers la surface en guise de second faisceau de lumière avec un second angle d'ouverture, qui est plus grand que le premier angle d'ouverture, afin de pouvoir projeter une ligne de lumière (LL) sur la surface (S) ; une première unité d'ajustement (120) conçue pour ajuster une distance (D) entre l'élément optique (102) et l'élément réfléchissant (110).

**2.** Système selon la revendication 1, dans lequel la première unité d'ajustement (120) est conçue de telle sorte que, par ajustement de la distance (D) entre l'élément optique (102) et l'élément réfléchissant (110), une longueur d'une ligne de lumière (LL) projetée sur la surface (S) est changée ; dans lequel l'augmentation de la distance (D) entre l'élément optique (102) et l'élément réfléchissant (110) augmente de préférence la longueur de la ligne de lumière (LL) projetée sur la surface (S).

**3.** Système selon l'une quelconque des revendications précédentes, dans lequel l'élément réfléchissant (110) correspond à l'un quelconque des éléments suivants : un miroir en forme de V, un miroir sensiblement en forme de V avec des extrémités concaves, un miroir en forme de cône, ou un miroir en forme de cylindre.

**4.** Système selon l'une quelconque des revendications 1 à 3, dans lequel l'élément optique (102) soit :

est l'une parmi une lentille de Powell standard avec une extrémité plate, et dans lequel l'élément réfléchissant (110) est un miroir sensiblement en forme de V avec des extrémités concaves, ou une lentille de Powell modifiée avec une surface de sortie sensiblement en forme de V, et dans lequel l'élément réfléchissant (110) est un miroir en forme de V avec des extrémités droites ; soit

comprend l'un quelconque des éléments suivants : une optique de collimation, une optique de forme libre, telle qu'une lentille de Powell, un réseau de micro-lentilles, tel qu'une lentille de Fresnel, un élément optique diffractif, un système de balayage MEMS, un système de balayage Galvano, ou une combinaison de ceux-ci.

**5.** Système selon l'une quelconque des revendications précédentes, dans lequel l'élément réfléchissant (110) est un miroir en forme de V dont un angle d'ouverture ($\theta$) est ajustable ; dans lequel une longueur de la ligne de lumière (LL) sur la surface est de préférence ajustée par ajustement de l'angle d'ouverture ($\theta$) du miroir en forme de V.

**6.** Système selon l'une quelconque des revendications précédentes, comprenant en outre une seconde unité d'ajustement (130) conçue pour ajuster un angle ($\beta$) entre l'unité de génération de lumière (100) et la surface (S) et/ou un angle ($\alpha$) entre l'élément réfléchissant (110) et la surface (S) ; dans lequel la seconde unité d'ajustement (130) est de préférence conçue pour décaler la zone d'incidence du premier faisceau de lumière sur l'élément réfléchissant (110), et/ou de telle sorte que, par ajustement de l'angle ($\beta$) entre l'unité de génération de lumière (100) et la surface (S) et/ou l'angle ($\alpha$) entre l'élément réfléchissant (110) et la surface (S), une position, une forme et/ou une courbure de la ligne projetée sur la surface (S) sont ajustées.

**7.** Système selon l'une quelconque des revendications précédentes, dans lequel le second faisceau de lumière, lorsqu'il est projeté sur la surface (S), forme l'un quelconque des éléments suivants : une ligne continue, une ligne en pointillés, une ligne droite, une ligne courbe, une ligne coudée, ou une combinaison de celles-ci.

**8.** Système selon l'une quelconque des revendications précédentes, dans lequel les une ou plusieurs sources de lumière (101) comprennent l'un quelconque des éléments suivants : une source de lumière ponctuelle, une diode laser, un laser à semi-conducteurs pompé par diode, ou une combinaison de ceux-ci.

**9.** Système selon l'une quelconque des revendications précédentes, dans lequel la surface (S) est une surface routière comprenant un marquage routier.

**10.** Système selon la revendication 9, dans lequel la surface routière est une surface routière rétroréfléchissante, et dans lequel le système d'éclairage (10) est conçu pour projeter un ou plusieurs marquages routiers dans un sens d'une circulation sur la surface routière ; et, dans lequel la première unité d'ajustement (120) est de préférence conçue pour permettre un ajustement de la ligne de lumière (LL) projetée selon la position et l'agencement des marquages routiers.

**11.** Système selon la revendication 10 en combinaison avec la revendication 6, dans lequel la seconde unité d'ajustement (130) est conçue pour permettre un ajustement supplémentaire de la ligne de lumière (LL) projetée selon la position et l'agencement des marquages routiers, de préférence également selon la courbure et/ou la forme des marquages routiers.

**12.** Un ou plusieurs mâts de luminaire comprenant le système (10) selon l'une quelconque des revendications précédentes.

**13.** Procédé de conception d'une ligne de lumière (LL) projetée sur une surface (S), ledit procédé comprenant :

la fourniture d'un système comprenant une unité de génération de lumière (100), comprenant une ou plusieurs sources de lumière (101) et un élément optique (102) conçu pour recevoir une lumière provenant des une ou plusieurs sources de lumière et pour émettre un premier faisceau de lumière en forme de ligne avec un premier angle d'ouverture ; et un élément réfléchissant, conçu pour recevoir le premier faisceau de lumière et pour réfléchir le premier faisceau de lumière reçu vers la surface en guise de second faisceau de lumière avec un second angle d'ouverture, qui est plus grand que le premier angle d'ouverture ;

la projection d'une ligne de lumière sur la surface à l'aide du système fourni ;

l'ajustement de la longueur de la ligne de lumière sur la surface par ajustement de la distance (D) entre l'élément optique et l'élément réfléchissant.

14. Procédé selon la revendication 13, ledit procédé comprenant en outre :

l'ajustement d'une position de la ligne de lumière sur la surface par ajustement d'un angle (β) entre l'unité de génération de lumière et la surface et/ou d'un angle (α) entre l'élément réfléchissant et la surface ; et/ou,

l'ajustement de la courbure et/ou de la forme de la ligne de lumière sur la surface par décalage de la zone d'incidence du premier faisceau de lumière.

15. Procédé selon la revendication 13 ou 14, dans lequel la surface est une surface routière comprenant un marquage routier et dans lequel le procédé comprend en outre :

l'ajustement de la position, de la courbure et/ou de la forme de la ligne de lumière pour qu'elle corresponde à une position du marquage routier ; et/ou

l'ajustement de la longueur de la ligne de lumière pour qu'elle corresponde à une longueur du marquage routier.

Fig. 1A

Fig. 1B

Fig. 2A

Fig. 2B

Fig. 2C

110

130

100

Fig. 2D

130

110

100

Fig. 2E

Fig. 3A

Fig. 3B

Fig. 3C

110

102

101

Fig. 4A

110

Fig. 4B

110

Fig. 4C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012154083 A